(19) Europäisches Patentamt
European Patent Office
Office européen des brevets

(11) **EP 2 142 890 B1**

(12) **EUROPÄISCHE PATENTSCHRIFT**

(45) Veröffentlichungstag und Bekanntmachung des Hinweises auf die Patenterteilung:
**19.07.2017 Patentblatt 2017/29**

(21) Anmeldenummer: **08735922.0**

(22) Anmeldetag: **08.04.2008**

(51) Int Cl.:
*G01F 1/684* *(2006.01)*        *G01F 5/00* *(2006.01)*

(86) Internationale Anmeldenummer:
**PCT/EP2008/054191**

(87) Internationale Veröffentlichungsnummer:
**WO 2008/128886 (30.10.2008 Gazette 2008/44)**

(54) **VORRICHTUNG ZUR MESSUNG STRÖMENDER MEDIEN**

DEVICE FOR MEASURING FLOWING MEDIA

DISPOSITIF DE MESURE DE FLUIDES EN ÉCOULEMENT

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **24.04.2007 DE 102007019282**

(43) Veröffentlichungstag der Anmeldung:
**13.01.2010 Patentblatt 2010/02**

(73) Patentinhaber: **Robert Bosch GmbH
70442 Stuttgart (DE)**

(72) Erfinder:
• **GMELIN, Christoph
70597 Stuttgart (DE)**
• **JOSCHKO, Richard
70499 Stuttgart (DE)**

(56) Entgegenhaltungen:
**DE-A1- 10 135 142        DE-A1- 10 253 970
US-A1- 2004 055 375        US-A1- 2004 231 405
US-A1- 2007 062 276**

## Beschreibung

Stand der Technik

Die Erfindung geht aus von bekannten Vorrichtungen zur Bestimmung wenigstens eines Parameters eines in einer Leitung in einer Hauptströmungsrichtung strömenden Mediums. Derartige Vorrichtungen werden beispielsweise eingesetzt, um Ansaugluftmassen einer Brennkraftmaschine zu messen. Insbesondere werden derartige Vorrichtungen in Form von Heißfilmluftmassenmessern eingesetzt. Es sind jedoch auch andere Arten von Vorrichtungen zur Bestimmung anderer oder weiterer Parameter denkbar, beispielsweise Temperaturfühler, Geschwindigkeitsmesser oder ähnliche Messvorrichtungen, sowie andere Messprinzipien als das genannte Heißfilmluftmassenmesserprinzip.

Heißfilmluftmassenmesser sind beispielsweise in DE 102 53 970 A1 beschrieben. Dabei wird eine Vorrichtung offenbart, welche ein Teil umfasst, welches mit einer vorbestimmten Ausrichtung in Bezug auf eine Hauptströmungsrichtung in eine vom strömenden Medium durchströmte Leitung einbringbar ist.

Dabei durchströmt ein Teilstrom des Mediums wenigstens einen in dem Teil vorgesehenen Messkanal, in welchem ein Messelement angeordnet ist. Zwischen Einlass und Messelement weist der Messkanal einen gekrümmten Abschnitt zur Umlenkung des durch den Einlass in den Messkanal eingetretenen Teilstroms des Mediums auf, wobei der gekrümmte Abschnitt im weiteren Verlauf in einen Abschnitt übergeht, in welchem das Messelement angeordnet ist. Dabei ist im Messkanal ein Mittel vorgesehen, welches die Strömung leitet und einer Ablösung der Strömung des Medienteilstroms von den Kanalwänden des Messkanals entgegenwirkt.

Weiterhin ist der Eingangsbereich im Bereich der Öffnung, welche der Hauptströmungsrichtung entgegenweist, mit schrägen oder gekrümmten Flächen versehen, welche so gestaltet sind, dass in den Eingangsbereich einströmendes Medium von dem Teil des Messkanals, welcher zum Messelement führt, weggelenkt wird. Dies bewirkt, dass im Medium enthaltene Flüssigkeits- oder Festkörperteilchen aufgrund ihrer Massenträgheit nicht zum Messelement gelangen und dieses verschmutzen können.

Vorrichtungen, wie beispielsweise die in der DE 102 53 970 A1 oder US 2007/0062276 A1 gezeigte Vorrichtung, müssen in der Praxis einer Vielzahl von Anforderungen und Randbedingungen genügen. Diese Randbedingungen sind aus der Literatur weitgehend bekannt und beispielsweise in DE 102 53 970 A1 und US 2007/0062276 A1 beschrieben.

Neben dem Ziel, einen Druckabfall an den Vorrichtungen insgesamt durch geeignete strömungstechnische Ausgestaltung zu verringern, besteht eine der hauptsächlichen Herausforderungen darin, die Signalqualität derartiger Vorrichtungen weiter zu verbessern. Diese Signalqualität bezieht sich insbesondere auf den Signalhub, welcher beispielsweise durch einen Durchsatz des Mediums durch den zum Sensorelement führenden Messkanal bestimmt wird, sowie gegebenenfalls auf die Verminderung von Signaldrift und der Verbesserung des Signal-zu-Rauschverhältnisses. Die beispielsweise in DE 102 53 970 A1 beschriebene Ausgestaltung der Einlassöffnung durch Flüssigkeits- und Staubpartikel abweisende Fläche dient insbesondere dem genannten Zweck der Verringerung der Signaldrift.

Am Ende der Fläche zweigt der Messkanal vom Hauptkanal ab, wobei hier üblicherweise eine scharfe Kante vorgesehen ist. Wassertropfen und andere Verunreinigungen können üblicherweise dieser Umlenkung im Bereich der Kante nicht folgen und fliegen geradeaus durch den Hauptkanal, ohne zum Sensorelement zu gelangen. Allerdings kommt es immer wieder vor, dass einzelne Verunreirigungen, insbesondere Wassertropfen auf der Fläche auftreffen und zu Spritzern führen. Diese leichten, vereinzelten Verunreinigungspartikel bzw. Spritzer gelangen mit dem Messluftstrom in den Messkanal und verursachen dort Signalstörungen. Insbesondere sind diese Signalstörungen bei Heißfilmluftmassenmessern durch eine Anlagerung von Flüssigkeitsfilmen auf der Oberfläche des Sensorchips bedingt, was die Wärmeleitfähigkeit und die Wärmekapazität des Sensorchips und somit dessen Messeigenschaften ändert.

Die US 2004/055375 A1, die DE 101 35 142 A1 und die US 2004/231405 A1 offenbaren weitere Vorrichtungen zur Bestimmung der Ansaugluftmasse einer Brennkraftmaschine mit einem in das strömenden Medium einbringbaren Steckerteil, wobei das Steckerteil einen Bypasskanal mit einer Einlassöffnung und einer Auslassöffnung aufweist.

Offenbarung der Erfindung

Die Erfindung ist in den Ansprüchen definiert.

Die Erfindung geht aus von der Erkenntnis, dass der oben beschriebene Effekt der Signalbeeinflussung durch auf die schräge Fläche (im Folgenden Leitfläche genannt) auftreffende Verunreinigungen und deren dadurch bedingte feine Verteilung vermindert werden kann, indem dieser "Spray" von feinverteilten, durch die Leitfläche zerstäubten Verunreinigungen hin zur seitlichen Kanalwand gelenkt wird. Auf der seitlichen Kanalwand ist in der Regel im Betrieb ein feiner Wasserfilm vorhanden, welcher die Tröpfchen und/oder andere Verunreinigungen bindet und somit vom Sensorchip fernhält.

Eine Möglichkeit, diese Ablenkung hin zur seitlichen Kanalwand zu fördern, besteht erfindungsgemäß darin, die Leitfläche schräg auszubilden. Dadurch werden wegspritzende Tröpfchen und andere Verunreinigungen von der Leitfläche mit höherer Wahrscheinlichkeit zur Seite reflektiert, und es werden mehr Tröpfchen und Verunreinigungen von den Kanalwänden aufgenommen. Das Resultat dieser Ausgestaltung ist, dass eine erheblich verminderte Anzahl oder sogar gar keine freien Tröpfchen mehr in den Messkanal gelangen und dadurch die Signaldrift beeinflussen.

Die Erfindung geht somit aus von bekannten Vorrichtungen zur Bestimmung wenigstens eines Parameters eines in einer Hauptströmungsrichtung strömenden Mediums, insbesondere einer Ansaugluftmasse einer Brennkraftmaschine. Insbesondere kann die Vorrichtung ein Heißfilmluftmassenmesser gemäß einer der eingangs genannten Konstruktionen umfassen. Alternativ oder zusätzlich können jedoch auch weitere Parameter des Mediums gemessen werden, beispielsweise Temperatur, Druck oder ähnliche Parameter. Bei dem strömenden Medium kann es sich um ein gasförmiges Medium oder auch um ein flüssiges Medium handeln, wobei jedoch auch andere fluide Formen möglich sind, beispielsweise Aerosole.

Die Vorrichtung umfasst ein in vorgegebener Ausrichtung zur Hauptströmungsrichtung des strömenden Mediums in das strömende Medium einbringbares Steckerteil mit einer Längserstreckungsachse. Der Begriff "Längserstreckungsachse" ist dabei weit zu fassen. Vorzugsweise handelt es sich bei dem Steckerteil um ein gerades, flaches Steckerteil, wobei sich die Längserstreckungsachse parallel zur Einsteckrichtung in ein Strömungsrohr erstrecken kann. Es sind jedoch auch leichte Krümmungen möglich des Steckerteils möglich. Maßgeblich ist im Wesentlichen die Längserstreckung im Bereich einer Eintrittsöffnung zu einem Hauptkanal (siehe unten), so dass auch die lokale Längserstreckung in diesem Bereich unter dem Begriff Längserstreckungsachse zu verstehen sein kann.

Das Steckerteil weist mindestens eine Einlassöffnung und mindestens eine Auslassöffnung sowie mindestens einen die Einlassöffnung und die Auslassöffnung verbindenden Hauptkanal auf. Weiterhin ist mindestens ein von dem Hauptkanal abzweigender Messkanal mit mindestens einem in dem Messkanal aufgenommenen Sensorelement zur Bestimmung des mindestens einen Parameters vorgesehen. Für die Ausgestaltungen des Sensorelements und die Ausgestaltungen von Haupt- und Messkanal kann beispielsweise auf die DE 102 53 970 A1 verwiesen werden und die darin beschriebenen Möglichkeiten. Daneben sind jedoch auch weitere Ausgestaltungen möglich.

Dabei ist die Vorrichtung derart ausgestaltet, dass in Strömungsrichtung vor der Abzweigung des Messkanals vom Hauptkanal mindestens eine die Strömung des Mediums vom Messkanal ablenkende Leitfläche vorgesehen ist. Beispielsweise kann diese Leitfläche ausgestaltet sein wie in DE 102 53 970 A1. Diese Leitfläche kann vorzugsweise im Wesentlichen eben ausgestaltet sein, wobei jedoch auch, insbesondere an den Rändern der Leitfläche, leichte Krümmungen (welche insbesondere konstruktionstechnisch bedingt sein können) umfasst sein können. Die Leitfläche umfasst vorzugsweise an der Abzweigung des Messkanals vom Hauptkanal eine scharfe Kante (auch "Zahn" genannt) und dient, wie oben beschrieben, im Wesentlichen der Abweisung von im strömendem Medium enthaltenen flüssigen oder festen Verunreinigungen, wie beispielsweise Wasser, Öl, Staub oder Rußpartikeln.

Insoweit entspricht die vorgeschlagene Vorrichtung beispielsweise im Wesentlichen der Konstruktion der DE 102 53 970 A1. Zur Umsetzung des oben beschriebenen erfindungsgemäßen Gedankens der Umlenkung von von der Leitfläche abprallenden oder wegspritzenden Verunreinigungen hin zur Kanalwand ist die Leitfläche jedoch zumindest teilweise in einem von 90° verschiedenen Winkel $\alpha$ zu einer Ebene angeordnet, welche durch die Hauptströmungsrichtung und die Längserstreckungsachse des Steckerteils aufgespannt wird.

Dabei ist grundsätzlich zu unterscheiden zwischen dem Winkel $\alpha$ zwischen der Leitfläche und der genannten Ebene und dem Winkel $\beta$ zwischen der scharfen Kante und der genannten Ebene. Vorzugsweise sind diese Winkel jedoch zumindest im Wesentlichen identisch. Die Kante verläuft vorzugsweise im Wesentlichen linear.

Als besonders wirksam haben sich dabei Winkel erwiesen, welche im Bereich zwischen 5° und 35° angeordnet sind. Mehr bevorzugt sind Winkelbereiche zwischen 10° und 25°, insbesondere zwischen 15° und 20°. Diese Winkelbereiche sind besonders geeignet, um bei üblichen Strömungsgeschwindigkeiten, insbesondere in Heißfilmluftmassenmessern, den Verunreinigungen, insbesondere Wasserspritzern, eine ausreichende Geschwindigkeitskomponente hin zu den Kanalwänden zu verleihen, so dass diese wirksam aus dem Messkanal ferngehalten werden.

Ein weiterer Vorteil des schrägen "Zahns" besteht darin, dass durch diese Schräge zusätzlich im Bereich der Abzweigung Wirbel erzeugt werden. Diese Wirbel haben den Effekt, dass sich die hinter der Abzweigung üblicherweise im Messkanal ausgebildeten Ablösegebiete, welche instabil sind und den Durchsatz durch den Messkanal vermindern, abgebaut werden, da die Wirbel eine Durchmischung des Luftstroms fördern. Damit wird durch den schrägen "Zahn" auch der Durchsatz durch den Messkanal erhöht und gleichmäßiger ausgestaltet. Dies wirkt sich insgesamt positiv auf den Signalhub aus, und Schwankungen und Rauschen im Signal werden dadurch weiter vermindert.

Kurze Beschreibung der Zeichnungen

Ausführungsbeispiele der Erfindung sind in der Zeichnung dargestellt und in der nachfolgenden Beschreibung näher erläutert. Es zeigen:

Figur 1      eine dem Stand der Technik entsprechende Vorrichtung zur Messung mindestens eines Parameters;

Figur 2      eine erfindungsgemäße Abwandlung der in Figur 1 gezeigten Vorrichtung in perspektivischer Darstellung; und

Figur 3     eine perspektivische Darstellung einer erfindungsgemäßen Vorrichtung mit in ein Strömungsrohr eingestecktem Steckfühler.

Ausführungsformen der Erfindung

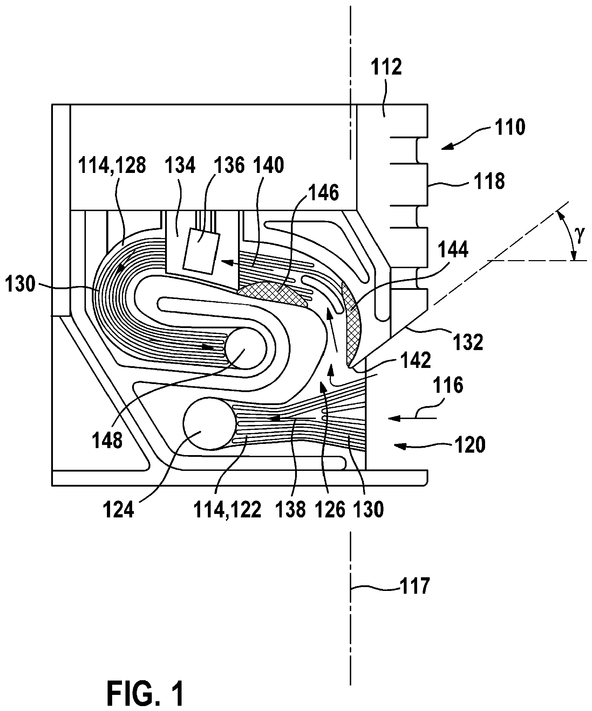

In Figur 1 ist eine dem Stand der Technik entsprechende Vorrichtung 110 zur Bestimmung mindestens eines Parameters in einem strömenden Medium in Draufsicht dargestellt. Eine derartige Vorrichtung wird beispielsweise in DE 102 53 970 A1 beschrieben. Im Weiteren sei, ohne den Umfang der Erfindung zu beschränken, angenommen, dass es sich bei dieser Vorrichtung 110 um einen Heißfilmluftmassenmesser zur Bestimmung eines Luftmassendurchsatzes im Ansaugtrakt einer Brennkraftmaschine handelt.

Die Vorrichtung 110 umfasst ein Steckerteil 112, welches in Figur 1 in Draufsicht mit geöffnetem Gehäuse dargestellt ist. Zu diesem Zweck wurde ein (in Figur 1 nicht zu erkennendes) Deckelteil abgenommen, was die Sicht auf Strömungskanäle 114 im Steckerteil freigibt. Das Steckerteil 112 ist ausgestaltet, um in ein mit einer Hauptströmungsrichtung 116 strömendes Medium, beispielsweise eine angesaugte Luftmasse, eingebracht zu werden. Beispielsweise kann die Luftmasse durch ein Strömungsrohr strömen, welches in Figur 1 nicht dargestellt ist, und das Steckerteil 112 kann in dieses Strömungsrohr eingesteckt werden, um in einer vorgegebenen Orientierung zur Hauptströmungsrichtung 116 ausgerichtet zu werden. Das Steckerteil 112 ist in dem dargestellten Ausführungsbeispiel gerade ausgeführt und weist eine Längserstreckungsachse 117 auf. Die Hauptströmungsrichtung 116 und die Längserstreckungsachse 117 spannen dabei eine Ebene auf, welche in dieser Darstellung in Figur 1 mit der Zeichenebene zusammenfällt.

Das Steckerteil weist eine der Hauptströmungsrichtung 116 entgegenweisende Anströmseite 118 auf, welche zur Verminderung des Druckabfalls und zur Verminderung von Störungen in der Strömung des Mediums abgerundet ausgestaltet ist. Auf der Anströmseite 118 ist eine Einlassöffnung 120 angeordnet, hinter der sich, als Teil der Strömungskanäle 114, ein Hauptkanal 122 anschließt. Dieser Hauptkanal 122 verläuft in etwa parallel zur Hauptströmungsrichtung 116 und mündet in eine Auslassöffnung 124, welche in diesem Ausführungsbeispiel seitlich am Steckerteil 112 angeordnet ist. Es sei daraufhingewiesen, dass, abweichend von dem in Figur 1 dargestellten Verlauf der Strömungskanäle 114, auch andere Ausgestaltungen möglich sind, beispielsweise eine Anordnung der Auslassöffnung 124 auf der Unterseite des Steckerteils 112.

An einer unmittelbar hinter der Einlassöffnung 120 gelegenen Abzweigung 126 zweigt vom Hauptkanal 122 ein Messkanal 128 ab, welcher einen weiteren Teil der Strömungskanäle 114 bildet. Wie in Figur 1 durch Pfeile symbolisiert, zweigt somit vom durch den Hauptkanal 122 strömenden Hauptstrom 138 ein Teilstrom 140 ab.

In diesem Ausführungsbeispiel sind die Strömungskanäle 114 mit Strömungsrillen 130 ausgestattet. Diese Strömungsrillen 130 sind im Bereich der Abzweigung 126, zu Beginn des Messkanals 128, unterbrochen und bewirken neben einer Verbesserung des Strömungsverlaufs eine Abweisung von flüssigen und/oder festen Verunreinigungen auf den Kanalwänden vom Messkanal 128.

Unmittelbar an der Einlassöffnung 120 ist eine Leitfläche 132 angeordnet, welche anströmendes Medium vom Messkanal 128 weg nach unten ablenkt. Dadurch wird dem auf die Leitfläche 132 auftreffenden Medium ein Impulsanteil senkrecht zur Hauptströmungsrichtung 116 (in Figur 1 nach unten) verliehen, so dass flüssige und/oder gasförmige Verunreinigungen, welche im Medium enthalten sind, von der Abzweigung 126 weggelenkt werden und aufgrund ihrer Massenträgheit durch den Hauptkanal 122 zur Auslassöffnung 124 geleitet werden. In diesem Ausführungsbeispiel bildet die Leitfläche 132 mit der Hauptströmungsrichtung einen Winkel $\gamma$ von ca. 55°. Auch andere Winkel sind jedoch einsetzbar.

Die Leitfläche 132 verhindert zumindest teilweise, dass derartige Verunreinigungen durch den Messkanal 128 zu einem in den Messkanal 128 hineinragenden Sensorträger 134 und dem darin beziehungsweise darauf aufgebrachten Sensor 136 gelangen und diesen verunreinigen. Dieser Sensor 136, bei welchem es sich beispielsweise um einen Heißfilmluftmassenmesser-Chip handeln kann, wie er aus dem Stand der Technik bekannt ist (z.B. der DE 102 53 970 A1 sowie dem darin aufgeführten Stand der Technik zu diesem Messprinzip), kann beispielsweise über eine Ansteuer- und Auswerteplatine oberhalb des Messkanals, welche mit dem Sensorträger 134 verbunden sein kann, angesteuert werden und ausgewertet werden. Diese Platine ist in Figur 1 nicht dargstellt.

Unmittelbar hinter der Abzweigung 126, an einem scharfen "Zahn" 142 am Ende der Leitfläche 132, bildet sich in dem Teilstrom 140 aufgrund der starken Umlenkung des Mediums in diesem Bereich ein erstes Ablösegebiet 144. Ein weiteres Ablösegebiet 146 bildet sich unmittelbar hinter einer zweiten Umlenkung des Messkanals 128.

Der durch den Messkanal 128 von der Abzweigung 126 hin zu einem Messkanalauslass 148 strömende Teilstrom 140 soll den gesamten Durchsatz an strömendem Medium repräsentieren und wird dementsprechend mittels des Sensors 136 gemessen. Die Ablösegebiete 144, 146 behindern jedoch den Teilstrom 140 und somit einen Durchsatz durch den Messkanal 128. Dadurch wird der Signalhub, wie oben beschrieben, vermindert. Zudem sind die Ablösegebiete 144, 146 in ihrer Größe instabil, was zu Schwankungen des Durchsatzes durch den Messkanal 128 und somit zu Signalschwankungen führt.

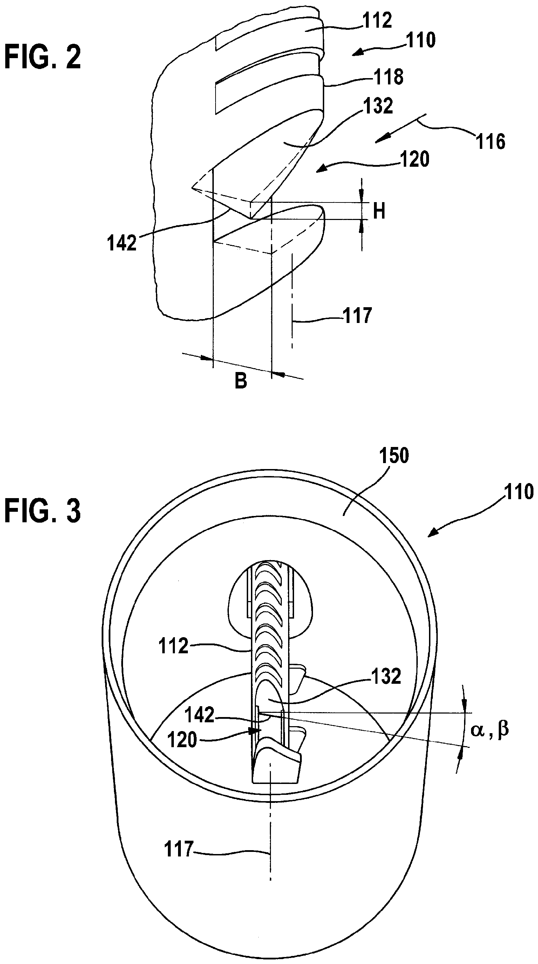

In den Figuren 2 und 3 ist eine erfindungsgemäße Abwandlung der Vorrichtung 110 dargestellt. Dabei zeigt Figur 2 eine ausschnittsweise perspektivische Darstellung des Bereichs der Einlassöffnung 120 in Ansicht schräg von unten. Figur 3 zeigt einen Blick in ein Strömungsrohr 150 in einer Blickrichtung parallel zur Zeichenebene in Figur 1, also in einer Ebene, welche durch die Hauptströmungsrichtung 116 und die Längserstreckungsachse 117 des Steckerteils 112 aufgespannt werden. Dabei ist die Blickrichtung in Figur 3 ebenfalls leicht schräg von unten auf das Steckerteil 112, das heißt in einem Winkel von ca. 20° zur Hauptströmungsrichtung 116. Die beiden Darstellungen sollen im Folgenden gemeinsam erläutert werden.

Wie insbesondere in der Darstellung in Figur 3 zu erkennen ist, verläuft die Leitfläche 132 in diesem Ausführungsbeispiel im Wesentlichen eben und endet in der geraden scharfen Kante 142. Dabei verläuft die scharfe Kante 142 und somit auch der "Zahn" 142 erfindungsgemäß nicht senkrecht zu der durch die Längserstreckungsachse 117 und die Hauptströmungsrichtung 116 aufgespannten Ebene, sondern bilden mit dieser den Winkel α bzw. β. α und β sind dabei in diesem Ausführungsbeispiel gleich und betragen ca. 15°.

Wie in Figur 2 zu erkennen ist, weist die Einlassöffnung 120 des Steckerteils 112 eine Breite B auf. Diese Breite bewegt sich beispielsweise im Bereich von ca. 5 mm. Dementsprechend ergibt sich zwischen der in Blickrichtung der Hauptströmungsrichtung 116 linken Seite der Kante 142 und der rechten Seite der Kante 142 ein Höhenunterschied H. Der Winkel α bzw. β ergibt sich rechnerisch durch tanα bzw.

$$\tan\beta = \frac{H}{B}$$

Typischerweise werden dabei Höhenunterschiede H im Bereich von 1 bis 2 mm eingesetzt, welche sich als gut geeignet erwiesen haben, um den beschriebenen Effekt der Ableitung von Wassertröpfchen bzw. anderen Verunreinigungen von der Leitfläche 132 auf einer der Wandungen der Strömungskanäle 114 zu bewirken.

**Patentansprüche**

1. Vorrichtung (110) zur Bestimmung wenigstens eines Parameters eines in einer Hauptströmungsrichtung (116) strömenden Mediums, insbesondere einer Ansaugluftmasse einer Brennkraftmaschine, mit einem in vorgegebener Ausrichtung zur Hauptströmungsrichtung (116) in ein das strömende Medium führendes Strömungsrohr einbringbaren Steckerteil (112) mit einer Längserstreckungsachse, die sich im Wesentlichen parallel zur Einsteckrichtung des Steckerteils (112) in das Strömungsrohr erstreckt, wobei das Steckerteil (112) mindestens eine Einlassöffnung (120) und mindestens eine Auslassöffnung (124) sowie wie mindestens einen die Einlassöffnung (120) und die Auslassöffnung (124) verbindenden Hauptkanal (122) aufweist, wobei mindestens ein von dem Hauptkanal (122) abzweigender Messkanal (128) mit mindestens einem in dem Messkanal (128) aufgenommenen Sensorelement (136) zur Bestimmung des mindestens einen Parameters vorhanden ist, wobei in Hauptströmungsrichtung (116) gesehen vor einer Abzweigung (126) des Messkanals (128) vom Hauptkanal (122) mindestens eine die Strömung des Mediums vom Messkanal (128) ablenkende Leitfläche (132) angeordnet ist, wobei die Leitfläche (132) im Wesentlichen eine ebene Leitfläche ist und die Leitfläche (132) zumindest teilweise in einem von 90° verschiedenen Winkel α zu einer durch die Hauptströmungsrichtung (116) und die Längserstreckungsachse des Steckerteils (112) aufgespannten Ebene angeordnet ist.

2. Vorrichtung (110) gemäß dem vorhergehenden Anspruch, wobei die Leitfläche (132) an der Abzweigung (126) in einer scharfen Kante (142) endet, wobei die Kante (142) zumindest teilweise in einem von 90° verschiedenen Winkel β zu der durch die Hauptströmungsrichtung (116) und die Längserstreckungsachse (117) aufgespannten Ebene angeordnet ist.

3. Vorrichtung (110) nach dem vorhergehenden Anspruch, wobei die Kante (142) im Wesentlichen linear verläuft.

4. Vorrichtung (110) nach einem der drei vorhergehenden Ansprüche, wobei der Winkel α im Wesentlichen gleich dem Winkel β ist.

5. Vorrichtung (110) nach einem der vorhergehenden Ansprüche, wobei der Winkel α im Bereich zwischen 5° und 35°, insbesondere zwischen 10° und 25° und besonders bevorzugt zwischen 15° und 20° liegt.

6. Vorrichtung (110) nach einem der vorhergehenden Ansprüche, wobei die Einlassöffnung (120) senkrecht zu der durch die Hauptströmungsrichtung (116) und die Längserstreckungsachse (117) aufgespannten Ebene eine Breite zwischen 3 mm und 10 mm und besonders bevorzugt bei 5 mm aufweist.

**Claims**

1. Apparatus (110) for determining at least one parameter of a medium flowing in a main flow direction (116), in particular of an intake air mass of an internal combustion engine, comprising a plug part (112) which can be inserted with a prespecified orientation in relation to the main flow direction (116) into a flow pipe carrying the flowing medium and which has an axis of longitudinal extent which extends substantially parallel to the insertion direction of the plug part (112) into the flow pipe, wherein the plug part (112) has at least one inlet opening (120) and at least one outlet opening (124) and also at least one main channel (122) which connects the inlet opening (120) and the outlet opening (124), wherein there is at least one measurement channel (128) which branches off from the main channel (122) and which has at least one sensor element (136), which is accommodated in the measurement channel (128), for determining the at least one parameter, wherein at least one guide face (132) which deflects the flow of medium from the measurement channel (128) is arranged in front of a branch (126) of the measurement channel (128) from the main channel (122) as seen in the main flow direction (116), wherein the guide face (132) is substantially a planar guide face and the guide face (132) is arranged at least partially at an angle $\alpha$, which is different from 90°, in relation to a plane which is spanned by the main flow direction (116) and the axis of longitudinal extent of the plug part (112).

2. Apparatus (110) according to the preceding claim, wherein the guide face (132) ends in a sharp edge (142) at the branch (126), wherein the edge (142) is arranged at least partially at an angle $\beta$, which is different from 90°, in relation to the plane which is spanned by the main flow direction (116) and the axis of longitudinal extent (117).

3. Apparatus (110) according to the preceding claim, wherein the edge (142) runs in a substantially linear manner.

4. Apparatus (110) according to one of the three preceding claims, wherein the angle $\alpha$ is substantially equal to the angle $\beta$.

5. Apparatus (110) according to one of the preceding claims, wherein the angle $\alpha$ lies in a range of between 5° and 35°, in particular between 10° and 25°, and particularly preferably between 15° and 20°.

6. Apparatus (110) according to one of the preceding claims, wherein the inlet opening (120) has a width of between 3 mm and 10 mm, and particularly preferably of 5 mm, perpendicular to the plane which is spanned by the main flow direction (116) and the axis of longitudinal extent (117).

**Revendications**

1. Dispositif (110) destiné à la détermination d'au moins un paramètre d'un fluide en écoulement dans une direction d'écoulement principale (116), notamment d'une masse d'air d'aspiration d'un moteur à combustion interne, comportant une pièce d'enfichage (112) pouvant être insérée dans un tube d'écoulement acheminant le fluide en écoulement selon une orientation prédéterminée par rapport à la direction d'écoulement principale (116), présentant un axe d'extension longitudinal qui s'étend sensiblement parallèlement à la direction d'enfichage de la pièce d'enfichage (112) dans le tube d'écoulement, dans lequel la pièce d'enfichage (112) comporte au moins une ouverture d'entrée (120) et au moins une ouverture de sortie (124) ainsi qu'au moins un canal principal (122) reliant l'ouverture d'entrée (120) à l'ouverture de sortie (124), dans lequel il est prévu au moins un canal de mesure (128) se séparant du canal principal (122), comportant au moins un élément de détection (136) logé dans le canal de mesure (128) pour la détermination de l'au moins un paramètre, dans lequel, dans la direction d'écoulement principale (116) vue avant une séparation (126) du canal de mesure (128) d'avec le canal principal (122), est disposée au moins une surface de guidage (132) déviant l'écoulement du fluide du canal de mesure (128), dans lequel la surface de guidage (132) est une surface sensiblement plane et la surface de guidage (132) est disposée au moins partiellement selon un angle $\alpha$ différent de 90° par rapport à un plan formé par la direction d'écoulement principale (116) et l'axe d'extension longitudinal de la pièce d'enfichage (112).

2. Dispositif (110) selon la revendication précédente, dans lequel la surface de guidage (132) se termine par une arête vive (142) au niveau de la séparation (126), dans lequel l'arête (142) est disposée au moins partiellement selon un angle $\beta$ différent de 90° par rapport au plan formé par la direction d'écoulement principale (116) et l'axe d'extension longitudinal (117).

3. Dispositif (110) selon la revendication précédente, dans lequel l'arête (142) s'étend sensiblement linéairement.

4. Dispositif (110) selon l'une des trois revendications précédentes, dans lequel l'angle $\alpha$ est sensiblement égal à l'angle $\beta$.

5. Dispositif (110) selon l'une quelconque des revendications précédentes, dans lequel l'angle $\alpha$ se situe dans la plage comprise entre 5° et 35°, notamment entre 10° et 25°, et de façon particulièrement préférable, entre 15° et 20°.

6. Dispositif (110) selon l'une quelconque des revendications précédentes, dans lequel l'ouverture d'entrée (120) présente, par rapport au plan formé par la direction d'extension principale (116) et l'axe d'extension longitudinal (102), une largeur comprise entre 3 mm et 10 mm, et de façon particulièrement préférable, de 5 mm.

**FIG. 1**

**FIG. 2**

112
110
118
132
116
120
H
142
117
B

**FIG. 3**

150
110
112
132
142
120
α, β
117

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10253970 A1
- US 20070062276 A1
- US 2004055375 A1
- DE 10135142 A1
- US 2004231405 A1